# EUROPÄISCHE PATENTSCHRIFT

(11) **EP 3 272 907 B1**
(45) Veröffentlichungstag und Bekanntmachung des Hinweises auf die Patenterteilung: **13.11.2019**
(21) Anmeldenummer: 16180387.9
(22) Anmeldetag: 20.07.2016
(51) Int. Cl.: C25B 11/04, C25B 11/12, C25B 15/02, C25B 15/08, C25B 1/06, C25B 9/20, F02B 43/10, F02M 25/12, F02D 19/06, F02D 19/08

(54) **VERFAHREN ZUM BETREIBEN EINER ELEKTROLYSEEINRICHTUNG SOWIE ANTRIEBSSYSTEM MIT ELEKTROLYSEEINRICHTUNG**
METHOD FOR OPERATING AN ELECTROLYSIS DEVICE AND DRIVE SYSTEM COMPRISING AN ELECTROLYSIS DEVICE
PROCÉDÉ DE FONCTIONNEMENT D'UN DISPOSITIF D'ELECTROLYSE ET SYSTÈME D'ENTRAÎNEMENT COMPRENANT UN DISPOSITIF D'ELECTROLYSE

(43) Veröffentlichungstag der Anmeldung: 24.01.2018
(73) Patentinhaber: Fuelsave GmbH, 69190 Walldorf (DE)
(72) Erfinder: HOFFMANN, Dirk, 21244 Buchholz i.d.N. (DE)
(74) Vertreter: Ridderbusch, Oliver

(56) Entgegenhaltungen:
- DE-B3-102009 025 887
- US-A- 5 513 600
- US-A- 5 766 443
- US-A1- 2012 111 734
- US-A1- 2015 240 368
- US-B1- 6 235 254

## Beschreibung

Die vorliegende Erfindung bezieht sich auf ein Verfahren zum Betreiben einer Elektrolyseeinrichtung zum Erzeugen von Wasserstoffgas und Sauerstoffgas nach dem Oberbegriff des Anspruchs 1, sowie auf ein Antriebssystem, das die Elektrolyseeinrichtung umfasst..

Elektrolyseeinrichtungen zum Erzeugen von Wasserstoffgas und Sauerstoffgas stellen ein stark wachsendes Anwendungsgebiet mit schnell zunehmender Bedeutung dar. Insbesondere durch die verstärkte Nutzung regenerativer Energiequellen werden zeitlich schwankende Mengen elektrischer Energie erzeugt, welche insbesondere durch Elektrolyseeinrichtungen genutzt werden können. Das dadurch erzeugte Wasserstoff- und Sauerstoffgas kann für vielfältige Zwecke eingesetzt werden. Beispielsweise können das Wasserstoff- und Sauerstoffgas wieder zur Stromerzeugung oder zu Heizzwecken genutzt werden. Ein vorrangiges Anwendungsgebiet sind Antriebssysteme, in denen das erzeugte Wasserstoff- und Sauerstoffgas beispielsweise in einem Verbrennungsmotor verbrannt wird. Antriebssysteme, die Gegenstand der vorliegenden Offenbarung sind, können allein oder in Ergänzung zu weiteren Antriebssystemen beispielsweise ein Schiff oder ein Fahrzeug antreiben. Auch stationäre Anwendungen werden erfasst, bei denen eine vom Antriebssystem erzeugte Bewegung beispielsweise einen Generator zur Erzeugung von elektrischem Strom antreibt.

Eine gattungsgemäße Elektrolyseeinrichtung zum Erzeugen von Wasserstoffgas und Sauerstoffgas umfasst mindestens einen Elektrolyseraum mit mehreren Elektroden. Bei einem gattungsgemäßen Verfahren zum Betreiben einer Elektrolyseeinrichtung wird diese dazu betrieben, Wasserstoffgas und Sauerstoffgas zu gewinnen / auszugeben.

Aus US 6,235,254 B1 ist ein Elektrolyseur zum Behandeln der Abgase eines Verbrennungsmotors bekannt. US 2015/0240368 A1 beschreibt einen Elektrolyseur, bei dem eine Anode und eine Kathode vorhanden sind, welche durch eine Membran voneinander getrennt sind. US 5,513,600 betrifft eine Elektrolyseeinrichtung zum Erzeugen von Wasserstoff- und Sauerstoffgas. In einen Elektrolyseraum ragen mehrere stabförmige Teile der Kathode, wobei der Elektrolyseraum weiterhin durch die Anode begrenzt wird. US 5,766,443 A beschreibt eine Elektrolysezelle für alkalische Stoffe, womit Wasserstoffperoxid erzeugt werden soll. DE 10 2009 025 887 B3 betrifft ein Elektrolysegerät zum Erzeugen von Gasen aus Wasser zur Förderung der Verbrennung in einer Verbrennungskraftmaschine. Auch US 2012/0111734 A1 beschreibt eine Elektrolyseeinrichtung zum Erzeugen von Wasserstoffgas und Sauerstoffgas aus Wasser.

Als eine **Aufgabe** der Erfindung kann angesehen werden, ein Verfahren zum Betreiben einer Elektrolyseeinrichtung sowie ein Antriebssystem mit einer Elektrolyseeinrichtung anzugeben, bei welchen in möglichst effizienter Weise Wasserstoff- und Sauerstoffgas erzeugt werden.

Diese Aufgabe wird durch das Antriebssystem mit Elektrolyseeinrichtung gemäß Anspruch 3 und durch das Verfahren mit den Merkmalen des Anspruchs 1 gelöst. Vorteilhafte Varianten des erfindungsgemäßen Antriebssystems und des erfindungsgemäßen Verfahrens sind Gegenstand der abhängigen Ansprüche und werden außerdem in der folgenden Beschreibung erläutert.

Bei der oben genannten Elektrolyseeinrichtung umfasst erfindungsgemäß mindestens eine der Elektroden Kohlenstofffasern, welche zu einer blattartigen Form aus Kohlenstofffasern / einer Kohlenstofffasermatte geformt sind. Mindestens eine andere der Elektroden umfasst eine Metallplatte und vorzugsweise keine Kohlenstofffasern.

Das Verfahren der oben genannten Art ist erfindungsgemäß dadurch weitergebildet, dass die Elektrolyseeinrichtung Wasserstoffgas und Sauerstoffgas mit Hilfe von Elektroden gewinnt, von denen mindestens eine Elektrode Kohlenstofffasern umfasst, welche zu einer Kohlenstofffasermatte geformt sind, und von denen mindestens eine andere Elektrode eine Metallplatte und keine Kohlenstofffasern umfasst. Das erfindungsgemäße Verfahren kann insbesondere den Betrieb eines erfindungsgemäßen Antriebssystems betreffen.

Die Menge an Wasserstoff- und Sauerstoffgas, die durch Elektrolyse gewonnen wird, hängt stark von der Größe des elektrischen Stroms zwischen Kathode und Anode ab. Mit größer werdender Spannung zwischen Kathode und Anode steigt hingegen nicht oder nur kaum die Menge an erzeugten Gasen. Stattdessen wird im Wesentlichen Wärme produziert. Je höher die Wärmeentwicklung ist, desto niedriger ist der Wirkungsgrad der Elektrolyse. Daher ist es wünschenswert, die Spannung zwischen Anode und Kathode gering zu halten. Hierbei darf eine Minimalspannung nicht unterschritten werden, unterhalb welcher ein Elektrolysevorgang abbricht. Außerdem ist zum Starten eines Elektrolysevorgangs kurzzeitig eine größere Spannung erforderlich, als sodann zum Aufrechterhalten des Elektrolysevorgangs erforderlich ist. Diese größere Spannung zum Starten wird als Überspannung bezeichnet. Die Überspannung ist materialabhängig. Je nach Materialwahl kann eine kleinere Überspannung gewählt werden, womit der Wirkungsgrad steigt.

Durch die erfindungsgemäße Materialwahl ist die Überspannung, die zum Starten des Elektrolysevorgangs benötigt wird, besonders gering, womit ein besonders hoher Wirkungsgrad erreicht wird. Als weiterer wesentlicher Vorteil wird die Elektrodenfläche, die für Elektrolyt zugänglich ist, durch eine Kohlenstofffasermatte drastisch erhöht.

Vorzugsweise umfasst jede Kathode eine Edelstahlplatte, besonders bevorzugt eine titanlegierte Edelstahlplatte. Jede Anode kann vorzugsweise ebenfalls eine oder mehrere (titanlegierte) Edelstahlplatten umfassen, wobei jede Anode vorzugsweise zumindest eine Kohlenstofffasermatte umfasst, welche die (titanlegierte) Edelstahlplatte(n) dieser Anode kontaktiert.

Versuche haben gezeigt, dass mit dieser Materialwahl die Spannung zum Aufrechterhalten der Elektroyse sowie die Überspannung zum Starten der Elektrolyse besonders gering sind. Beispielsweise kann die Spannung zum Aufrechterhalten der Elektroyse 1,6V betragen und die Überspannung zusätzlich 0,7V, also insgesamt 2,3V betragen. Damit resultiert ein Wirkungsgrad der Elektrolyse von über 80%.

Es können mehrere Elektroden vorhanden sein, welche jeweils Anoden sind. Dabei umfassen sämtliche Anoden Kohlenstofffasern, welche zu jeweils einer Kohlenstofffasermatte geformt sind. Analog können mehrere Elektroden vorhanden sein, welche Kathoden sind und keine Kohlenstofffasern umfassen, sondern jeweils eine Metallplatte, vorzugsweise eine titanlegierte Edelstahlplatte umfassen.

Jede Kohlenstofffasermatte ist zwischen jeweils zwei Platten befestigt, welche gemeinsam eine der Elektroden bilden, insbesondere eine der Anoden. Dabei kann jede der Platten, zwischen denen jeweils eine Kohlenstofffasermatte befestigt ist, jeweils eine (titanlegierte) Edelstahlplatte sein.

Bei jeder Anode kann vorgesehen sein, dass die Kohlenstofffasermatte die jeweiligen zwei Platten direkt berührt und zwischen diesen gepresst gehalten wird. Hierdurch wird ein zuverlässiger Kontakt hergestellt und die Oberfläche der Anode vergrößert. Durch die hohe Leitfähigkeit der Kohlenfasern wird die Oxidation der Anode und damit ihre Beanspruchung verringert. Die Anode, welche auch als Opferanode bezeichnet wird, hat dadurch auch eine höhere Lebensdauer.

Die Platten, zwischen denen sich jeweils eine der Kohlenstofffasermatten befindet, können gelocht sein zum Durchlassen von Elektrolyt an die jeweilige Kohlenstofffasermatte. Beispielsweise können mehr als die Hälfte der Fläche einer solchen Platte gelocht sein. Alternativ kann eine Platte auch durch ein Gitter ersetzt sein, was einer gelochten Platte ähnelt. Die Umfangsabmessungen der Platten entsprechen vorzugsweise denen der dazwischen befindlichen Kohlenstofffasermatte.

Um eine Anode aus zwei zusammengedrückten Platten mit dazwischen eingeklemmter Kohlenstofffasermatte herzustellen, kann diese Anordnung zunächst zusammengedrückt werden und sodann die Platten punktweise zueinander fixiert werden, insbesondere punktweise verschweißt oder miteinander verschraubt.

Für weitere Effizienzsteigerungen sindim Elektrolyseraum als Elektroden mehrere Anoden und Kathoden abwechselnd zu einem Elektrodenstapel übereinander gestapelt. Zwischen benachbarten Elektroden kann jeweils mindestens ein Abstandshalter angeordnet sein. Die Anoden können mechanisch und elektrisch leitend miteinander verbunden sein. Ebenso können die Kathoden mechanisch und elektrisch leitend miteinander verbunden sein.

Während der Elektrolyse entstehen an den Elektroden Gasblasen, welche Wasserstoffgas beziehungsweise Sauerstoffgas enthalten können. Die Gasblasen haften zunächst an den Elektroden und steigen nur allmählich im Elektrolyt nach oben, wo sie aus dem Elektrolyseraum abgeführt werden können. Solange die Gasblasen an den Elektroden haften, wirken sie dort entsprechend einem Dielektrikum, so dass die Spannung nachteilig erhöht wird, die für die Elektrolyse notwendig ist. Um dies zu vermeiden, umfasst eine bevorzugte Ausführungsform Mittel, um die Gasblasen effizient wegzuspülen. Der hierzu vorgesehene Aufbau kann besonders kostengünstig realisiert werden und unterscheidet sich dadurch wesentlich von bekannten Verfahren, um Gasblasen von den Elektroden zu entfernen. So kann gemäß bevorzugten Ausführungsformen im Elektrolyseraum mindestens ein Rohr zum Leiten eines Elektrolyts angeordnet sein. Das mindestens eine Rohr kann in Stapelungsrichtung der mehreren Elektroden verlaufen. Eine Elektrolytpumpe kann vorgesehen sein zum Pumpen des Elektrolyts durch das mindestens eine Rohr. Das Rohr umfasst nun mehrere Öffnungen, beispielsweise Bohrungen, zum Ausstoßen des Elektrolyts. Dabei sind die Öffnungen so angeordnet, dass Elektrolyt aus den Öffnungen an die Elektroden ausgestoßen wird zum Ablösen von Gasblasen, die durch Elektrolyse an den Elektroden entstehen. Durch ein Rohr, das an seiner Mantelfläche mit Löchern versehen ist, kann bei einfachem Aufbau der gesamte Stapel an Elektroden bespült werden. Indem die Löcher genügend klein gewählt werden, beispielsweise kleiner als 4mm Durchmesser, kann mit einer einzigen Pumpe eine genügend starke Strömung erzeugt werden, um Gasblasen zu lösen.

Die Öffnungen im Rohr sind vorzugsweise so angeordnet, dass zwischen zwei benachbarte Elektroden stets aus mindestens einer der Öffnungen Elektrolyt ausgestoßen wird. Die Anzahl an zueinander in Längsrichtung des Rohrs versetzten Öffnungen ist somit mindestens so hoch wie die Anzahl an Anoden oder Kathoden.

Je größer die Mengen an zu erzeugendem Wasserstoff- und Sauerstoffgas sind, desto größer ist der Durchmesser beziehungsweise die Fläche der plattenförmigen Anoden und Kathoden zu wählen. Damit dennoch durch die oben beschriebene Elektrolyt-Spülung Gasblasen von der gesamten Fläche der Elektroden gelöst werden können, sind vorzugsweise an gegenüberliegenden Seiten des Elektrodenstapels mindestens zwei Rohre angeordnet. Die Öffnungen der Rohre sind so ausgerichtet, dass Elektrolyt aus den verschiedenen Rohren im Wesentlichen aufeinander zu strömt, insbesondere zum Bilden einer turbulenten Strömung. Hierdurch können Gasblasen noch effizienter gelöst werden.

Die Form einer Kohlenstofffasermatte soll als eine blattartige Form verstanden werden. Diese kann dadurch definiert sein, dass ihre Länge und Breite wesentlich größer als ihre Höhe ist, beispielsweise mindestens 50 oder 500mal so groß. Eine Matte kann im Wesentlichen eben oder gekrümmt oder gerollt sein.

Ein Abstandshalter zwischen einer Anode und einer dazu benachbarten Kathode ist zur elektrischen Isolierung und zum Vorgeben eines gewünschten Abstands zwischen einem solchen Anoden-Kathoden-Paar relevant. Der Abstand bestimmt wesentlich eine elektrische Spannung hierzwischen, welche für die Effizienz der Elektrolyse relevant ist.

Ein Abstandshalter kann eine im Wesentlichen gleiche Grundfläche wie die Kohlenstofffasermatte haben und/oder kann eine Elektrolytströmung zwischen den Kohlenstofffasermatte entlang erlauben.

Zwischen zwei Elektroden können weitere Komponenten angeordnet sein, beispielsweise ein oder mehr Träger zum Halten einer benachbarten Kohlenstofffasermatte. Der Träger kann auch elektrisch leitend zum elektrischen Kontaktieren der Kohlenstofffasermatte sein und kann insbesondere durch die oben beschriebene Platte oder Metallplatte gebildet sein, womit der Träger Teil dieser Elektrode ist. Alternativ kann ein elektrischer Kontakt auch über eine Kontaktierungsschicht erfolgen. Die Kontaktierungsschicht und/oder der Träger können plattenartig, insbesondere als Lochplatte, oder netzartig geformt sein. Die Grundfläche kann wiederum im Wesentlichen die gleiche Größe haben wie die Grundfläche der Kohlenstofffasermatte. Der Ausdruck "im Wesentlichen" kann in dieser Beschreibung "identisch" umfassen und kann als eine Abweichung bis maximal 10% oder maximal 20% verstanden werden. Eine Kohlenstofffasermatte kann auch zwischen zwei der vorgenannten Träger oder zwei der vorgenannten Kontaktierungsschichten angeordnet sein. Alternativ oder zusätzlich kann auch ein Diaphragma zwischen jeweils benachbarten Elektroden vorgesehen sein. Dadurch können erzeugtes Sauerstoffgas und erzeugtes Wasserstoffgas getrennt dem Elektrolyseraum entnommen werden.

An den Elektroden bildet sich Wasserstoffgas und Sauerstoffgas jeweils als Bläschen. Im Übrigen ist der Elektrolyseraum mit Elektrolyt gefüllt, so dass die Elektroden vom Elektrolyt im Wesentlichen umgeben sind. Die Bläschen aus Wasserstoff- und Sauerstoffgas steigen teilweise auf und können sodann aus dem Elektrolyseraum entnommen werden. Soweit Bläschen noch an den Elektroden haften oder sich jedenfalls zwischen den Elektroden befinden, vermindern sie an diesen Stellen Elektrolysereaktionen. Dies verschlechtert den Wirkungsgrad der Elektrolyseeinrichtung. Um dem entgegenzuwirken, kann mindestens eine Unterdruckpumpe genutzt werden. Diese ist mit dem Elektrolyseraum verbunden zum Erzeugen eines Unterdrucks im Elektrolyseraum. Die mindestens eine Unterdruckpumpe kann insbesondere so angeordnet ist, dass sie im Betrieb erzeugtes Wasserstoffgas und Sauerstoffgas abpumpt. Indem ein Unterdruck im Elektrolyseraum erzeugt wird, kann erzeugtes Gas schneller aus dem Elektrolyseraum gelangen und es sind weniger Gasbläschen zwischen den Elektroden vorhanden. Dadurch steigt der Wirkungsgrad.

Es kann bevorzugt sein, wenn eine Stromversorgung der Elektroden nicht durchgängig, sondern in Pulsen mit einer Stromeinschaltdauer und einer Strompausendauer erfolgt. In diesem Pulsbetrieb liegen stets abwechselnd eine Stromeinschaltdauer, in welcher ein elektrischer Strom zwischen den Elektroden fließt, und eine Strompausendauer vor, in welcher die Stromversorgung der Elektroden abgeschaltet wird und ein elektrischer Strom abebbt. Ein Elektrolysevorgang, in dem Wasserstoffgas und Sauerstoffgas erzeugt werden, endet nicht sofort mit einem Wechsel von der Stromeinschaltdauer zur Strompausendauer, sondern kann für eine gewisse Zeitspanne fortfahren. Die Strompausendauer wird nun geringfügig kürzer als diese Zeitspanne gewählt, so dass der Elektrolysevorgang während der Strompausendauer nicht abbricht. Durch die darauffolgende Stromeinschaltdauer wird der Elektrolysevorgang, also die Entstehung von Wasserstoff- und Sauerstoffgas, ohne Unterbrechung fortgesetzt. Somit findet der Elektrolysevorgang durchgängig sowohl während den Stromeinschaltdauern als auch während den Strompausendauern statt, mit einem gewissen Zeitversatz nach erstmaligem Einschalten der Stromeinschaltdauer. Ein Arbeitsstrom der Elektrolyse bricht demnach nicht ab, während die Stromversorgung zu den Elektroden ein- und ausgeschaltet wird. Eine Stromeinschaltdauer kann länger gewählt sein als eine Strompausendauer und kann beispielweise die 1,5fache bis 3fache Länge der Strompausendauer betragen. Ein wesentlicher Vorteil dieses Pulsbetriebs liegt darin, dass weniger elektrische Energie eingebracht wird als bei einer durchgängigen Stromversorgung, wobei dennoch der Elektrolysevorgang durchgängig erfolgt und somit die Menge an erzeugtem Wasserstoff- und Sauerstoffgas durch den Pulsbetrieb nur geringfügig oder gar nicht reduziert ist. Im Ergebnis ist dadurch der Wirkungsgrad der Elektrolyse höher als bei einer durchgängigen Stromversorgung.

Ein erfindungsgemäßes Antriebssystem umfasst einen Verbrennungsmotor und die hier beschriebene Elektrolyseeinrichtung. Ein Leitungssystem verbindet den Elektrolyseraum mit dem Verbrennungsmotor, um ein Gasgemisch, welches zumindest einen Teil des von der Elektrolyseeinrichtung erzeugten Wasserstoffgases und Sauerstoffgases umfasst, dem Verbrennungsmotor zuzuführen.

Bei dem Antriebssystem wird zusätzlich zum Gasgemisch, das das erzeugte Wasserstoffgas und Sauerstoffgas umfasst, auch ein Brennstoff verbrannt. Bei dem Brennstoff kann es sich insbesondere um Diesel, Benzin oder einem anderen aus Erdöl gewonnenen Brennstoff handeln. Das Antriebssystem umfasst weiter einen Brennstofftank, welcher mit dem Verbrennungsmotor verbunden ist zum Versorgen des Verbrennungsmotors mit dem Brennstoff.

Bei dem erfindungsgemäßen Verfahren können zusätzlich die folgenden Schritte vorgesehen sein:
- mit einem Verbrennungsmotor wird ein Brennstoff verbrannt,
- mit einer Elektrolyseeinrichtung werden Wasserstoffgas und Sauerstoffgas gewonnen und
- mit einem Leitungssystem, welches den Elektrolyseraum mit dem Verbrennungsmotor verbindet, wird zusätzlich zum Brennstoff auch ein Gasgemisch, welches zumindest einen Teil des von der Elektrolyseeinrichtung erzeugten Wasserstoffgases und Sauerstoffgases umfasst, dem Verbrennungsmotor zugeführt.

Indem Wasserstoffgas und Sauerstoffgas einer Elektrolyseeinrichtung zusammen mit dem Brennstoff verbrannt werden, kann der Verbrennungsprozess vorteilhaft beeinflusst werden. Insbesondere können die Entstehung von Schadstoffen verringert werden und die Motoreneffizienz kann unter Umständen verbessert sein. Die Effizienz von Elektrolyseeinrichtungen, die Teil bekannter Antriebssysteme sind, ist jedoch stark begrenzt. Hinsichtlich der Kosten, Betriebszuverlässigkeit und der Genauigkeit in der Bereitstellung einer momentan gewünschten Menge an Wasserstoff- und Sauerstoffgasen besteht ein Verbesserungsbedarf.

Das erzeugte Gasgemisch, welches zumindest Sauerstoff- und Wasserstoffgas umfasst, kann dem Verbrennungsmotor zugeführt werden. Dort wird es zusammen mit dem eingesetzten Brennstoff verbrannt. Bei diesem kann es sich um beispielsweise Diesel oder Benzin handeln. Das Gasgemisch dient daher nicht als wesentlicher Energieträger der Verbrennung, sondern beeinflusst den Verbrennungsprozess des Brennstoffs und beeinflusst insbesondere die Entstehung von Schadstoffen. Noch bessere Ergebnisse hierbei können erzielt werden, wenn das Gasgemisch außer Sauerstoff- und Wasserstoffgas auch gasförmige Kohlenwasserstoffe umfasst. Zu diesem Zweck kann ein Vergasungstank vorgesehen sein, in dem flüchtige organische Verbindungen, insbesondere Methanol oder Ethanol, aufgenommenen sind. Diese organischen Verbindungen werden teilweise vergast, das heißt sie gehen von der flüssigen Form in den Gaszustand über.

Sodann können diese vergasten organischen Verbindungen Teil des vorgenannten Gasgemisches werden. Hierzu kann das Leitungssystem mit dem Vergasungstank verbunden sein, um vergaste organische Verbindungen / Kohlenwasserstoffe aus dem Vergasungstank dem Gasgemisch, das zum Verbrennungsmotor geleitet wird, beizugeben.

Die Unterdruckpumpe kann in einem Leitungssystem insbesondere zwischen der Elektrolyseeinrichtung und dem Vergasungstank angeordnet sein. Das Leitungssystem kann so gestaltet sein, dass von der Elektrolyseeinrichtung erzeugtes Wasserstoffgas und/oder Sauerstoffgas zumindest teilweise durch den Vergasungstank und fakultativ weiter zu einem Verbrennungsmotor geleitet werden. In dieser Weise kann ein gewünschtes Mischungsverhältnis zu den vergasten Kohlenwasserstoffen zuverlässig und in einfacher Weise bewirkt werden. Zum Einleiten von Wasserstoffgas und/oder Sauerstoffgas kann der Vergasungstank in einem unteren Bereich mehrere Düsen aufweisen. Als unterer Bereich kann insbesondere die untere Hälfte oder das untere Viertel des Vergasungstanks angesehen werden. Durch diese Einleitung im unteren Bereich kommt es vorteilhafterweise zu einer stärkeren Vergasung. Indem mehrere Düsen genutzt werden, können die eingeleiteten Gase gleichmäßiger verteilt den Vergasungstank durchströmen, was ebenfalls für eine stärkere Vergasung vorteilhaft ist.

Die eingeleiteten Wasserstoff- und Sauerstoffgase können jedoch teilweise im Vergasungstank kondensieren. Dies würde der Vergasung der Kohlenwasserstoffe entgegenstehen, womit unerwünscht weniger Kohlenwasserstoffe vergast würden. Dies kann durch regelmäßigen Austausch des Inhalts des Vergasungstanks kompensiert werden. Um das Kondensationsproblem grundsätzlich zu meiden, kann es aber auch vorgesehen sein, dass das Wasserstoffgas und das Sauerstoffgas nicht durch den Vergasungstank geleitet werden. Bei dieser Ausführung werden vielmehr vergaste Kohlenwasserstoffe aus dem Vergasungstank heraus geleitet und sodann mit dem Wasserstoffgas und/oder dem Sauerstoffgas vermischt und gemeinsam weitergeleitet.

Der Vergasungstank kann einen Auslass aufweisen, welcher mit dem Verbrennungsmotor verbunden ist. Außerdem kann der Vergasungstank einen Lufteinlass aufweisen, über den Luft, beispielsweise Umgebungsluft oder ein Gas oder Gasgemisch, in den Vergasungstank einleitbar ist. Eine Pressluftvorrichtung ist erfindungsgemäß vorhanden und mit dem Lufteinlass verbunden, um Luft in den Vergasungstank zu pressen. Bei der Pressluftvorrichtung kann es sich insbesondere um eine Pumpe / Luftpumpe handeln. Je nach Einsatzgebiet der Elektrolyseeinrichtung kann aber auch eine Pressluftvorrichtung bereits vorhanden sein. Dies ist beispielsweise bei einem Schiff üblicherweise der Fall. Hier kann die Pressluftvorrichtung des Schiffs genutzt werden, welche Pressluft auch für weitere Anwendungen auf dem Schiff bereitstellt.

Durch das Einleiten von Luft ist steuerbar, wie viel Kohlenwasserstoffe im Vergasungstank vergast werden. Insbesondere können durch die Pressluftvorrichtung weit höhere Mengen vergaster Kohlenwasserstoffe erzeugt werden, als ohne Lufteinleitung möglich wäre. Dies ist beispielsweise vorteilhaft, um eine für den Verbrennungsprozess im Verbrennungsmotor momentan geeignete Menge vergaster Kohlenwasserstoffe bereitzustellen, insbesondere auch bei Volllastbetrieb des Verbrennungsmotors.

Der Auslass kann in einem oberen Bereich des Vergasungstanks und der Lufteinlass kann in einem unteren Bereich des Vergasungstanks angeordnet sein. Dadurch strömt in den Vergasungstank gepresste / gepumpte Luft durch die flüssigen Kohlenwasserstoff, wobei diese zum Teil vergast werden.

Der Vergasungstank kann zusätzlich zum Lufteinlass einen weiteren Einlass aufweisen, welcher mit der Elektrolyseeinrichtung verbunden ist. Durch getrennte Einlässe können die Mengen an eingeleiteter Umgebungsluft und eingeleitetem Wasserstoff/Sauerstoffgemisch von der Elektrolyseeinrichtung unabhängig voneinander eingestellt werden.

Schließlich kann der Vergasungstank auch eine Befüllungsöffnung umfassen zum Nachfüllen von als Flüssigkeit vorliegenden organischen Verbindungen, beispielsweise Ethanol. Ein entsprechender Vorratstank kann über eine Leitung mit der Befüllungsöffnung verbunden sein.

Eine elektronische Steuereinheit kann vorgesehen und dazu eingerichtet sein, in der Elektrolyseeinrichtung durch die Unterdruckpumpe einen Unterdruck zu erzeugen, welcher unter 1 bar liegt, insbesondere zwischen 200 mbar und 700 mbar, insbesondere zwischen 300 mbar und 600 mbar. Für einen möglichst hohen Wirkungsgrad der Elektrolyseeinrichtung sollten die Elektroden möglichst vollständig von Elektrolyt umgeben sein. Blasenbildungen an den Elektroden, also Gase wie zum Beispiel erzeugtes Wasserstoff- und Sauerstoffgas, hindern die Elektrolyse und machen höhere Temperaturen erforderlich. Durch den erzeugten Unterdruck steigen erzeugte Gasbläschen an Wasserstoff- und Sauerstoffgas vermehrt innerhalb des flüssigen Elektrolyts nach oben, wo das Wasserstoff- und Sauerstoffgas aus dem Elektrolyseraum herausgeleitet wird. Durch diese Druckreduzierung steigt der Wirkungsgrad der Elektrolyseeinrichtung. Zudem kann durch den verhältnismäßig niedrigen Druck die Elektrolyseeinrichtung bei einer Temperatur von unter 40°C, insbesondere bei 36 bis 39°C betrieben werden, was ebenfalls für einen hohen Wirkungsgrad der Elektrolyseeinrichtung förderlich ist.

Die Unterdruckpumpe kann so betrieben werden, dass sie aus der Elektrolyseeinrichtung so viel Gas (insbesondere entstehendes Wasserstoff- und Sauerstoffgas) absaugt, dass im Betrieb der Elektrolyseeinrichtung höchstens ein Viertel des Elektrolyseraums, bevorzugt höchstens 10 Prozent des Elektrolyseraums, mit Gas gefüllt ist.

Die Unterdruckpumpe kann eine Pumpe prinzipiell beliebiger Bauart sein. Sie kann auch aus mehreren Pumpeinheiten bestehen. Dies ist insbesondere vorteilhaft, wenn erzeugtes Wasserstoffgas und Sauerstoffgas getrennt, also nicht als Knallgas, abgesaugt werden.

Zum Ermitteln eines Drucks im Elektrolyseraum kann im oder am Elektrolyseraum ein Drucksensor vorgesehen sein. Der Drucksensor kann mit der elektronischen Steuereinheit verbunden sein. Die elektronische Steuereinheit kann dazu eingerichtet sein, auf Basis eines mit Hilfe des Drucksensors ermittelten Drucks die Unterdruckpumpe zu regeln.

Die Unterdruckpumpe kann zusätzlich zu einer Elektrolyt-Umwälzpumpe eingesetzt werden. Die Elektrolyt-Umwälzpumpe pumpt Elektrolyt in den Elektrolyseraum, vorzugsweise in einem unteren Bereich von diesem. Am oberen Auslass verlässt Elektrolyt zusammen mit dem erzeugten Gas den Elektrolyseraum. Auf den Auslass kann eine Kondensatfalle oder ein Gas-Flüssigkeitsseparator folgen. Hiermit wird das Elektrolyt vom erzeugten Gas getrennt und kann sodann über einen Elektrolyt-Kreislauf zurück in den Elektrolyseraum befördert werden. Im Elektrolyse-Kreislauf können auch Kühlmittel, beispielsweise ein Wärmetauscher, zum Kühlen des Elektrolyts angeordnet sein. Durch die Elektrolyse-Prozesse erwärmt sich die Elektrolytlösung, wobei der Wirkungsgrad der Elektrolyse auch temperaturabhängig ist. Durch Kühlen des Elektrolyts kann somit der Wirkungsgrad erhöht werden. Die Elektrolyt-Umwälzpumpe kann sich im Elektrolyt-Kreislauf an einer Stelle befinden, die nur von Elektrolyt und nicht vom erzeugten Gas durchströmt wird. Im Unterschied dazu kann sich die Unterdruckpumpe an einer Stelle befinden, die entweder nur vom erzeugten Gas und nicht von Elektrolyt, oder aber vom erzeugten Gas und vom Elektrolyt durchströmt wird.

Indem die Umwälzpumpe Elektrolyt durchgängig durch den Elektrolyseraum befördert, ist dieser stets im Wesentlichen vollständig mit Elektrolyt gefüllt. Dies ist für einen möglichst hohen Wirkungsgrad hilfreich.

Eine elektronische Steuereinheit kann die Unterdruckpumpe so ansteuern, dass sie aus dem Elektrolyseraum so viel Gas (also Wasserstoff- und Sauerstoffgas) absaugt, dass im Betrieb der Elektrolyseeinrichtung nie mehr als ein Viertel des Elektrolyseraums mit Gas gefüllt ist.

Als Elektrolyt kann allgemein eine wässrige Flüssigkeit aufgefasst werden, welche eine zumindest teilweise als Ionen vorliegende Substanz enthält. Elektrolyte können beispielsweise Säuren, Basen oder Salze umfassen. Im Elektrolyt beziehungsweise der Elektrolyt-Lösung enthaltenes Wasser kann genutzt werden, um hieraus Wasserstoffgas und Sauerstoffgas zu gewinnen.

Das erzeugte Wasserstoffgas und Sauerstoffgas können zusammen mit gasförmigen flüchtigen organischen Verbindungen, also insbesondere zusammen mit in Gasform überführtes Methanol und/oder Ethanol, in die Verbrennungskammer des Verbrennungsmotors geleitet werden. Ein solches Gasgemisch kann eine NOx-Erzeugung reduzieren und eine besonders schnelle Verbrennung von Diesel in der Verbrennungskammer bewirken. Durch eine schnellere Verbrennung kann ein höherer Druck zu einem bestimmten Zeitpunkt erzeugt werden, womit schlussendlich eine effizientere Kraftübertragung möglich ist.

Das Gasgemisch wird stets zusätzlich zu einem fossilen Energieträger in die Verbrennungskammer gegeben und dort verbrannt. Der wesentliche freigesetzte Energieanteil, beispielsweise mindestens 70% oder mindestens 90%, stammt dabei vom fossilen Energieträger, beispielsweise ein Dieselkraftstoff. Das zusätzliche Gasgemisch dient demnach nicht als Ersatzenergiequelle, sondern hilft, einen gewünschten Verbrennungsablauf des fossilen Energieträgers zu bewirken. Dadurch kann die Entstehung von Schadstoffen verringert werden. Zudem kann der Verbrennungsprozess schneller erfolgen, wodurch eine effizientere Kraftweiterleitung möglich ist. Vorteilhafterweise kann durch das Einleiten des Gasgemisches eine Zündung eines eingeleiteten fossilen Energieträgers in der Verbrennungskammer bewirkt werden. Durch das Gasgemisch, welches Knallgas umfasst, kann die Verbrennung schneller erfolgen. Es kann vorgesehen sein, dass ein Zündzeitpunkt, der durch den Zeitpunkt des Einleitens des Gasgemisches in die Verbrennungskammer vorgegeben und gesteuert wird, knapper vor dem oberen Totpunkt der Kolbenbewegung des Verbrennungsmotors erfolgt als üblicherweise. Ein solcher späterer Zündzeitpunkt kann gewählt werden, da die Verbrennung besonders schnell abläuft. Zu einem gewünschten Zeitpunkt kann so ein höherer Druck erzeugt werden.

Die genannten flüchtigen organischen Verbindungen können prinzipiell eine bestimmte organische Verbindung oder ein Gemisch verschiedener organischer Verbindungen sein. Unter "flüchtigen" organischen Verbindungen können alle organischen Verbindungen angesehen werden, welche bei Raumtemperatur überwiegend gasförmig sind und/oder einen Siedebereich unter 100°C oder unter 200°C oder 300°C aufweisen. Organische Verbindungen können insbesondere Kohlenwasserstoffe sein und/oder alle Verbindungen, die überwiegend aus Wasserstoff- und Kohlenstoffatomen bestehen. Beispiele von solchen organischen Verbindungen sind Alkanole (wie Methanol und Ethanol) oder Alkane (wie Methan oder Ethan).

Unter dem Vergasungstank kann prinzipiell ein beliebiger Behälter verstanden werden, in welchem flüchtige organische Verbindungen aufgenommen sind. Diese können dort zumindest teilweise von flüssiger Form in Gasform übergehen.

Das Leitungssystem so gestaltet sein, dass es das erzeugte Gasgemisch über eine Luftansaugkomponente des Verbrennungsmotors diesem zugeführt wird. Das Gasgemisch kann somit zusammen mit Gasen, die zur Verbrennung des Brennstoffs in die Verbrennungskammer gegeben werden, geleitet werden. Bei einer bevorzugten Ausgestaltung ist ein Turbolader vorhanden und das Leitungssystem ist so gestaltet, dass das Gasgemisch über einen Verdichter des Turboladers zur Verbrennungskammer leitbar ist. Als Vorteil können hierdurch die Verbrennungskammer und direkt daran angrenzende Komponenten des erfindungsgemäßen Antriebsystems gleich gestaltet sein wie bei herkömmlichen Antriebsystemen. Zudem wird durch den Turbolader eine besonders effektive Einstellung der Menge an Gasgemisch, die in die Verbrennungskammer geleitet wird, ermöglicht. Denn der Turbolader befördert umso mehr Gasgemisch zum Verbrennungsmotor, je höher der von diesem verursachte Abgasdruck ist.

Unter dem Ausdruck "Elektrolyseeinrichtung" kann allgemein eine beliebige Vorrichtung verstanden werden, welche unter Nutzung von elektrischer Energie Wasserstoffgas und Sauerstoffgas erzeugt, also insbesondere H₂ und O₂. Als Ausgangsstoff der Elektrolyse kann Wasser oder eine wasserhaltige Mischung verwendet werden. Es kann vorteilhaft sein, wenn die Elektrolyseeinrichtung und das daran anschließende Leitungssystem so gebildet sind, dass erzeugtes Wasserstoffgas und Sauerstoffgas ungetrennt als Knallgas befördert werden. Bei Verwendung in einem Antriebssystem kann hierdurch bei vergleichsweise einfacher Konstruktion eine zeitlich exakte Zündung in der Verbrennungskammer durch Einleiten dieses Knallgases ermöglicht werden.

Der Verbrennungsmotor des Antriebssystems kann ein in prinzipiell bekannter Weise gebildeter Motor sein, welcher durch Verbrennung eines (insbesondere fossilen) Energieträgers Wärmeenergie und damit Bewegungsenergie erzeugt. Hiermit kann insbesondere ein Fahrzeug oder ein Schiff angetrieben werden. Ein Beispiel eines fossilen Energieträgers ist Diesel, das heißt ein Dieselkraftstoff, wobei die genaue Zusammensetzung des Dieselkraftstoffes in im Wesentlichen bekannter Weise variabel sein kann.

Das Antriebssystem kann auch einen Abgasfilter zum Reinigen von Abgasen des Verbrennungsmotors umfassen, beispielsweise einen Rußpartikelfilter. Für eine möglichst hohe Lebensdauer eines Abgasfilters und eine effiziente Wirkung ist die Reinigung des Abgasfilters wichtig. Dies kann mit Sauerstoffgas erreicht werden. Wird dieses dem Abgas vorm Abgasfilter zugefügt, kann es am Filter als Radikal wirken und so bei der Säuberung des Filters dienen. Dies wird bei einer bevorzugten Ausführungsform der Erfindung umgesetzt. Hier kann ein Trennmittel, etwa ein Diaphragma, vorhanden sein, zum Trennen von dem Wasserstoffgas und dem Sauerstoffgas, welche in der Elektrolyseeinrichtung erzeugbar sind. Zudem ist eine Leitung zum Leiten eines Anteils des Sauerstoffgases zum Abgasfilter vorhanden, wobei das zur Verbrennungskammer geleitete Gasgemisch das übrige Sauerstoffgas (also den Anteil des Sauerstoffgases, welcher nicht zum Abgasfilter geleitet wird) und das Wasserstoffgas sowie die vergasten organischen Verbindungen umfassen kann. Zweckmäßigerweise wird die Elektrolyseeinrichtung mit einem elektrischen Strom versorgt, durch welchen in der Elektrolyseeinrichtung das Wasserstoffgas und das Sauerstoffgas gewonnen werden. Zudem wird Wasser eingeleitet, aus welchem das Wasserstoffgas und das Sauerstoffgas erzeugt werden. Vorzugsweise ist eine elektronische Steuereinheit vorhanden und dazu eingerichtet, abhängig von einem Ladedruck des Verbrennungsmotors eine oder mehrere der folgenden Größen einzustellen: den elektrischen Strom; eine Wassereinleitung in die Elektrolyseeinrichtung; und eine Pumpleistung der Unterdruckpumpe. Die elektronische Steuereinheit kann dazu eingerichtet sein, die einzustellende Größe oder Größen umso größer einzustellen, je höher der Ladedruck ist. Dieser bezeichnet einen Luftdruck in einer Ansaugleitung des Verbrennungsmotors. Anstelle des Ladedrucks kann prinzipiell auch ein anderer hiervon abhängiger Druck für die Steuerung verwendet werden, beispielsweise ein Abgasdruck, insbesondere vor einem Turbolader. Um den Ladedruck und/oder einen anderen für die Steuerung genutzten Druck zu erfassen, können zweckmäßigerweise entsprechende Druckmessmittel vorhanden sein. Auch kann anstelle eines Drucks eine mit der Motorenleistung verbundene Größe für die Steuerung genutzt werden, beispielsweise eine Motordrehzahl. Unter Umständen kann es jedoch bei Nutzung solcher elektrischer Signale leichter zu Fehlern kommen als bei einer Steuerung über den (Lade-)Druck.

Die Steuerung kann insbesondere so erfolgen, dass die Menge an eingeleitetem Gasgemisch umso größer ist, je größer die Menge des fossilen Energieträgers ist, die in die Verbrennungskammer eingeleitet wird. Das erzeugte Gasgemisch dient demnach nicht als Ersatz für einen fossilen Brennträger / Energieträger. Vielmehr wird das Gasgemisch als Zusatz genutzt, welcher den Verbrennungsvorgang in wünschenswerter Weise beeinflusst. Die elektronische Steuereinheit können den Strom und die Pumpleistung insbesondere so einstellen, dass ein Verhältnis von eingespritztem Diesel zu dem eingeleiteten Gasgemisch im Wesentlichen konstant ist, also im Wesentlichen unabhängig ist von einer Einspritzrate und einer eingespritzten Dieselmenge. Unter "im Wesentlichen konstant" können Schwankungen bis höchstens 10%, vorzugsweise höchstens 5%, des vorgenannten Verhältnisses angesehen werden.

Es kann vorgesehen sein, eine Pumpleistung der Unterdruckpumpe umso größer einzustellen, je größer ein Ladedruck des Verbrennungsmotors ist. Eine maximale Pumpleistung wird eingestellt, wenn der Ladedruck einen vorgegebenen Ladedruck-Schwellwert erreicht oder übersteigt. Durch die erhöhte Pumpleistung wird mehr Wasserstoffgas und Sauerstoffgas in die Verbrennungskammer geleitet. Zudem werden auch mehr vergaste Kohlenwasserstoffe aus dem Vergasungstank zum Verbrennungsmotor geleitet. Steigt der Ladedruck über den Ladedruck-Schwellwert hinaus, kann es wünschenswert sein, die Menge vergaster Kohlenwasserstoffe, die zugeführt werden, weiter zu erhöhen. Insbesondere hierzu kann mit einer Pressluftvorrichtung Luft in den Vergasungstank hinein gepresst werden. Dabei kann vorgesehen sein, dass die Menge an hinein gepresster Luft mit einem über den vorgegebenen Ladedruck-Schwellwert weiter steigenden Ladedruck weiter erhöht wird. Steigt der Ladedruck über den Ladedruck-Schwellwert hinaus, werden somit zwar nicht mehr Wasserstoff- und Sauerstoffgas eingeleitet, wohl aber mehr vergaste organische Verbindungen, was den Verbrennungsprozess günstig beeinflussen kann. In anderen Worten kann vorgesehen sein, bis zu einem zweiten Ladedruck-Schwellwert immer mehr Luft mit der Pressluftvorrichtung zuzuführen, wobei der zweite Ladedruck-Schwellwert größer als der zuvor genannte Ladedruck-Schwellwert ist. Anstelle einer Steuerung über den Ladedruck-Schwellwert kann auch beispielsweise ein Schwellwert für einen anderen Druck verwendet werden, welcher vom Ladedruck abhängt, beispielsweise der Abgasdruck, oder ein Schwellwert für eine Motordrehzahl. Als Pressluftvorrichtung kann hier insbesondere eine Pumpe für Luft vorgesehen sein, deren Pumpleistung variiert wird.

Es kann bevorzugt sein, dass ein Vorratstank vorhanden und mit dem Vergasungstank verbunden ist. Der Vorratstank enthält organische Verbindungen und dient dem Befüllen des Vergasungstanks. Damit ein im Vergasungstank erzeugtes Gasgemisch ein gewünschtes Verhältnis zwischen Knallgas und organischen Verbindungen hat, ist es zweckmäßig, den Vergasungstank nicht zu groß zu wählen. Damit dennoch eine große Menge organischer Verbindungen mitgeführt werden kann, kann ein Volumen des Vorratstanks mindestens 3mal, vorzugsweise mindestens 5mal so groß sein wie ein Volumen des Vergasungstanks.

Die Erfindung betrifft weiterhin ein Schiff mit einem wie hierin beschrieben gebildeten Antriebssystem sowie ein Fahrzeug, insbesondere einen LKW, mit einem wie hierin beschrieben gebildeten Antriebssystem.

Prinzipiell kann es auch möglich sein, die hier beschriebenen Gestaltungen der Kathode und Anode miteinander zu vertauschen.

Durch den bestimmungsgemäßen Gebrauch der beschriebenen Ausführungsformen der Elektrolyseeinrichtung und des Antriebssystems ergeben sich Varianten des erfindungsgemäßen Verfahrens. Zudem sind bevorzugte Ausführungsformen der erfindungsgemäßen Elektrolyseeinrichtung und des erfindungsgemäßen Antriebsystems, insbesondere dessen elektronische Steuereinheit, eingerichtet zum Ausführen der beschriebenen Varianten des erfindungsgemäßen Verfahrens.

Weitere Vorteile und Merkmale der Erfindung werden nachstehend mit Bezug auf die beigefügten schematischen Figuren beschrieben. Hierbei zeigen:
- Fig. 1: eine schematische Darstellung eines Ausführungsbeispiels eines erfindungsgemäßen Antriebsystems mit einer erfindungsgemäßen Elektrolyseeinrichtung;
- Fig. 2: eine schematische Darstellung eines weiteren Ausführungsbeispiels eines erfindungsgemäßen Antriebsystems mit einer erfindungsgemäßen Elektrolyseeinrichtung und
- Fig. 3: eine schematische Darstellung eines weiteren Ausführungsbeispiels eines erfindungsgemäßen Schiffsantriebsystems mit einer erfindungsgemäßen Elektrolyseeinrichtung.

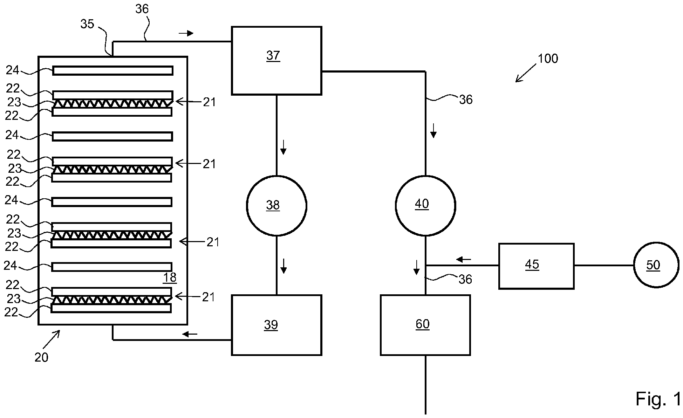

Fig. 1 zeigt schematisch ein Ausführungsbeispiel einer erfindungsgemäßen Elektrolyseeinrichtung, welche Teil eines erfindungsgemäßen Antriebsystems 100 ist. Dieses kann wiederum Bestandteil eines hier nicht dargestellten Schiffs oder Fahrzeugs sein.

Als wesentliche Komponenten umfasst das Antriebsystem 100 eine Elektrolyseeinrichtung 20 zum Erzeugen von Wasserstoffgas und Sauerstoffgas, sowie einen Verbrennungsmotor 60, dem außer einem fossilen Brennträger auch das erzeugte Wasserstoffgas, das Sauerstoffgas zugeführt werden. Vorzugsweise ist auch ein Vergasungstank 45 zum Vergasen von flüchtigen organischen Verbindungen vorhanden, welche ebenfalls dem Verbrennungsmotor 60 zugeführt werden.

Durch die Zugabe dieses Gasgemisches kann die Verbrennung von Diesel oder auch einem anderen fossilen Brennstoff schneller erfolgen und es entstehen weniger Schadstoffe, die im Abgas ausgegeben werden.

Zunächst wird in der Elektrolyseeinrichtung 20 Wasser oder ein anderer Ausgangsstoff mit Hilfe von elektrischer Energie in Wasserstoffgas, Sauerstoffgas und eventuell weitere Bestandteile umgewandelt. Die Elektrolyseeinrichtung 20 sollte Wasserstoff- und Sauerstoffgas möglichst effizient in verhältnismäßig großen Mengen bereitstellen können. Der hierfür vorgesehene Aufbau der Elektrolyseeinrichtung 20 wird nachstehend beschrieben:
Elektrolyseeinrichtung 20 umfasst mindestens einen Elektrolyseraum, in dem mehrere Elektroden 21, 24 gestapelt sind. Die Elektroden sind von Elektrolyt 18 umgeben. Jeweils jede zweite Elektrode ist elektrisch miteinander verbunden. Somit sind die Elektroden 21 elektrisch miteinander verbunden und bilden die Anode, während die Elektroden 24 elektrisch miteinander verbunden sind und die Kathode bilden. Jede Elektrode 21 umfasst eine Kohlenstofffasermatte 23, also Kohlenstofffasern oder Carbonfasern, welche eine Matte oder ein Vlies bilden. Darunter soll eine blattartige Form verstanden werden. Kohlenstofffasern bieten eine im Vergleich zu ihrer Masse und ihrem Volumen sehr große Oberfläche. Die blattartige Form gewährleistet die Zugänglichkeit der Kohlenstofffasern für insbesondere Elektrolyt. Der Wirkungsgrad einer solchen Elektrolyseeinrichtung 20 mit Kohlenstofffasermatten 23 ist wesentlich höher als bei herkömmlichen Aufbauten.

Die Kohlenstofffasern können miteinander verwoben sein oder einen Filz bilden. Sie können mit anderen Fäden, die nicht Kohlenstofffasern sind, zu einer stabilen Matte genäht oder gewoben werden. Auch kann ein Bindematerial, beispielsweise ein Duro- oder Thermoplast, zu den Kohlenstofffasern hinzugegeben werden, um eine Mattenform zu bilden.

Jede Anode 21 umfasst im dargestellten Beispiel zwei Platten 22, insbesondere titanlegierte Edelstahlplatten. Zwischen diesen ist die Kohlenstofffasermatte 23 der jeweiligen Anode 21 befestigt. Für einen stabilen Zusammenhalt und eine gute elektrische Kontaktierung können die beiden Platten 22 einer Anode 21 zusammengepresst und punktweise verschweißt sein.

Jede Kathode 24 umfasst im dargestellten Beispiel hingegen allein eine Platte, insbesondere eine titanlegierte Edelstahlplatte, ohne eine Kohlenstofffasermatte.

Durch diesen Aufbau kann die Elektrolyse mit verhältnismäßig niedriger Spannung und insbesondere einer niedrigen zum Elektrolysestart erforderlichen Überspannung betrieben werden. Dadurch ist die Wärmeentwicklung besonders niedrig und der Wirkungsgrad entsprechend hoch.

In einem oberen Bereich umfasst die Elektrolyseeinrichtung 20 einen Auslass 35, über den erzeugtes Wasserstoff- und Sauerstoffgas an ein Leitungssystem 36 ausgegeben werden. Das Leitungssystem 36 umfasst Fluidleitungen, insbesondere Rohre und/oder Schläuche, über die zumindest ein Teil des erzeugten Wasserstoff- und Sauerstoffgases in den Brennraum des Verbrennungsmotors 60 geleitet werden.

Auf den Auslass 35 kann fakultativ eine Kondensatfalle 37 folgen, mit welcher das erzeugte Wasserstoff- und Sauerstoffgas von flüssigen Bestandteilen getrennt werden, etwa von flüssigem Elektrolyt. Das Elektrolyt wird von einer Elektrolyt-Umwälzpumpe 38 über einen Elektrolytkreislauf zurück in die Elektrolyseeinrichtung 20 befördert. Es kann ein Elektrolyt-Vorratsbehälter 39 vorgesehen sein, welcher mit Elektrolyt gefüllt ist. Hierdurch kann die Konzentration möglicher Verunreinigungen des Elektrolyts verringert werden. Am Elektrolytkreislauf kann auch ein Wärmetauscher (nicht dargestellt) vorhanden sein, über den durchströmendes Elektrolyt Wärme abgibt. Dadurch kann ein Aufheizen des Elektrolyts durch die Elektrolysevorgänge kompensiert werden. Die Umwälzpumpe 38 befördert durchgängig Elektrolyt in die Elektrolyseeinrichtung 20, wodurch am oberen Auslass 35 Elektrolyt zusammen mit den erzeugten Gasen austritt. Eine Elektrolyt-Umwälzpumpe 38 und/oder ein Elektrolyt-Vorratsbehälter 39 sind aber nicht zwingend erforderlich.

Um Wasserstoff- und Sauerstoffgas aus der Elektrolyseeinrichtung 20 zu saugen, kann eine Unterdruckpumpe 40 verwendet werden. Diese bewirkt außerdem einen Unterdruck innerhalb der Elektrolyseeinrichtung 20. Dadurch wird die Anzahl an Bläschen aus erzeugtem Wasserstoff- und Sauerstoffgas, welche an den Elektroden 21, 24 haften, reduziert, womit der Wirkungsgrad der Elektrolyseeinrichtung 20 steigt.

Auf die Unterdruckpumpe 40 kann prinzipiell aber auch verzichtet werden. Durch die oben beschriebene Gestaltung der Kathoden 24 und Anoden 21 können große Mengen an Wasserstoff- und Sauerstoffgas erzeugt werden, ohne dass eine große Wärmeentwicklung damit einhergeht. Durch die Gasentstehung kann unter Umständen ein genügend hoher Druck erzeugt werden, der die Gase aus dem Auslass 35 drückt.

Das Wasserstoff- und Sauerstoffgas kann entweder gemeinsam als Knallgas geleitet werden, oder alternativ über beispielsweise Diaphragmen in der Elektrolyseeinrichtung separiert werden. In letzterem Fall umfasst der Auslass 35 separate Kanäle für Wasserstoffgas und Sauerstoffgas und auch die darauf folgenden Komponenten (beispielsweise die Kondensatfalle 37 und/oder die Unterdruckpumpe 40) können jeweils für eine separate Wasserstoffleitung und eine separate Sauerstoffleitung ausgelegt sein. Insbesondere kann hierzu die Unterdruckpumpe 40 auch mehrere Pumpeinheiten umfassen.

Das Wasserstoff- und Sauerstoffgas wird von der Kondensatfalle 37 weiter zum Verbrennungsmotor 60 geleitet. Zuvor wird es vermischt mit vergasten organischen Verbindungen, beispielsweise vergastem Ethanol und/oder Methanol. Hierzu ist ein Vergasungstank 45 vorgesehen, in dem flüchtige organische Verbindungen aufgenommen sind, beispielsweise Ethanol und/oder Methanol. Diese befinden sich im Wesentlichen als Flüssigkeit im Vergasungstank 45, wobei ein Anteil von diesen in Gasform übergeht. Um die Menge an vergasten Verbindungen einzustellen, wird Luft in den Vergasungstank 45 gepresst oder gepumpt. Hierzu wird eine Pressluftvorrichtung 50 verwendet. Bei dieser handelt es sich im dargestellten Beispiel um eine Luftpumpe 50. Je mehr Luft in den Vergasungstank 45 gepumpt wird, desto mehr Kohlenwasserstoffe werden vergast und können zusammen mit dem Wasserstoff- und Sauerstoffgas zum Verbrennungsmotor 60 geleitet werden.

Im dargestellten Beispiel werden vergaste Kohlenwasserstoffe und das Wasserstoff- und Sauerstoffgas außerhalb des Vergasungstanks 45 miteinander gemischt. Alternativ können aber auch das Wasserstoff- und Sauerstoffgas (Knallgas) durch den Vergasungstank 45 geleitet werden. Dadurch kann ein bestimmtes Verhältnis von Knallgas zu vergasten Kohlenwasserstoffen zuverlässig erzeugt werden.

Das beschriebene Gasgemisch kann beispielsweise über den Verdichter eines Turboladers zum Verbrennungsmotor 60 geleitet werden. Dort entzündet sich das Gasgemisch und bewirkt eine Verbrennung von ebenfalls eingeleitetem fossilem Brennstoff, beispielsweise von eingespritztem Dieselkraftstoff, welcher aus einem Brennstofftank eingeleitet wird. Abgase werden vom Verbrennungsmotor zu einer Abgasturbine des Turboladers geführt.

Eine Zufuhr des Gasgemisches zum Verbrennungsmotor 60 soll umso größer sein, je größer die Menge an eingeleitetem fossilem Brenn-/Kraftstoff ist. Hierfür wird unter anderem der Turbolader genutzt. Dessen Abgasturbine treibt den Verdichter umso stärker an, je höher ein Abgasdruck an der Abgasturbine ist. Werden nur geringe Kraftstoffmengen mit dem Verbrennungsmotor 60 verbrannt, so ist folglich der Druck an der Abgasturbine gering und der Verdichter erzeugt auch nur eine geringe Sogwirkung für das oben beschriebene Gasgemisch. Werden hingegen größere Mengen an Brenn-/Kraftstoff verbrannt, bewirkt der Verdichter eine stärkere Ansaugung des Gasgemisches.

Indem das erzeugte Gasgemisch dem fossilen Energieträger in der Verbrennungskammer des Verbrennungsmotors 60 zugeführt wird, kann eine besonders schnelle Verbrennung erfolgen. Hierdurch kann die Zündung besonders kurz vor einem oberen Totpunkt eines Kolbens des Verbrennungsmotors 60 erfolgen, womit ein höherer Wirkungsgrad möglich ist. Zudem sinkt die Menge an erzeugten Schadstoffen im Abgas.

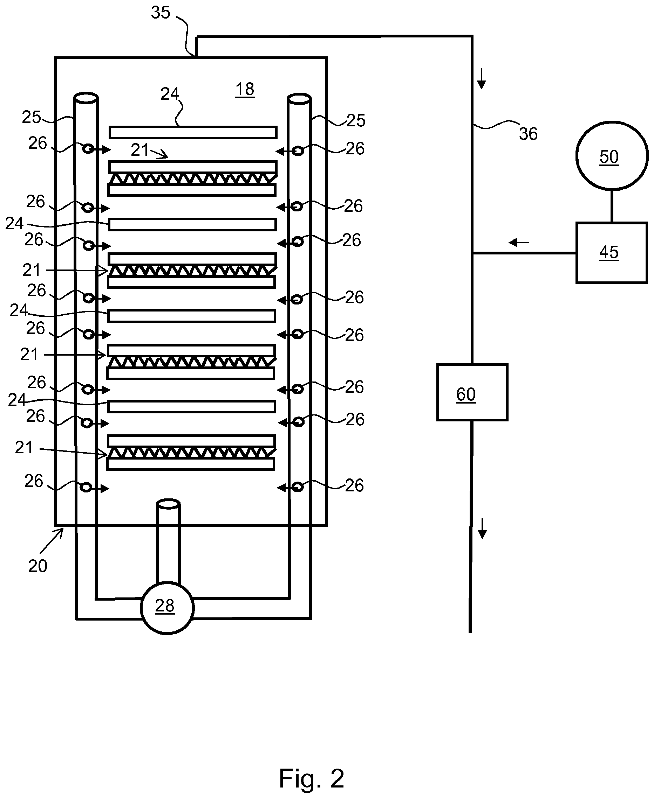

Ein weiteres Ausführungsbeispiel eines erfindungsgemäßen Antriebssystems 100 ist schematisch in Fig. 2 dargestellt. Komponenten mit den gleichen Bezugszeichen wie bei Fig. 1 können gleich gebildet sein und gleich wirken wie zu Fig. 1 beschrieben, und umgekehrt.

Die Elektrolyseeinrichtung 20 aus Fig. 2 ist wie diejenige aus Fig. 1 aufgebaut, umfasst aber zusätzlich eine Einrichtung zum Entfernen von Gasblasen, die an den Elektroden 21, 24 erzeugt werden und zunächst dort haften. Gasblasen erhöhen nachteilig die für die Elektrolyse erforderliche Spannung. Daher ist es wünschenswert, die Gasblasen, welche das erzeugte Wasserstoffgas oder Sauerstoffgas enthalten, möglichst rasch von der jeweiligen Elektrode 21, 24 zu lösen. Hierzu wird bei Fig. 2 Elektrolyt, das heißt die Elektrolyt-Lösung, gegen die Elektroden 21, 24 geströmt. Zu diesem Zweck sind mindestens ein, im dargestellten Beispiel zwei, perforierte Rohre 25 vorhanden. Jedes Rohr 25 umfasst mehrere Löcher 26, durch welche Elektrolyt ausgestoßen wird und an oder gegen die Elektroden 21, 24 strömt. Durch diese Strömung werden Gasblasen gelöst und steigen in Richtung des Auslasses 35 auf. An jeder Lücke zwischen einer Kathode 24 und einer benachbarten Anode 21 ist mindestens ein Rohrloch 26 vorgesehen, so dass aus bereits einem einzigen Rohr 25 eine Spülung entlang aller Elektroden 21, 24 möglich ist.

Zum Pumpen des Elektrolyts 18 durch die Rohre 25 wird eine Elektrolytpumpe 28 verwendet. Ein Pumpeneinlass ist mit dem Elektrolyseraum verbunden, sodass Elektrolyt 18 aus dem Elektrolyseraum zu den Rohren 25 befördert wird. Ein separater Vorratsbehälter für Elektrolyt ist nicht erforderlich. Es kann aber alternativ auch vorgesehen sein, dass die Elektrolytpumpe 28 nicht aus dem Elektrolyseraum, sondern aus einem Vorratsbehälter Elektrolyt entnimmt.

In dem Beispiel von Fig. 2 sind im Unterschied zu Fig. 1 keine Kondensatfalle 37, kein Vorratsbehälter 39 und keine Unterdruckpumpe 40 vorhanden. Eine oder mehrere dieser Komponenten können aber auch ergänzt werden.

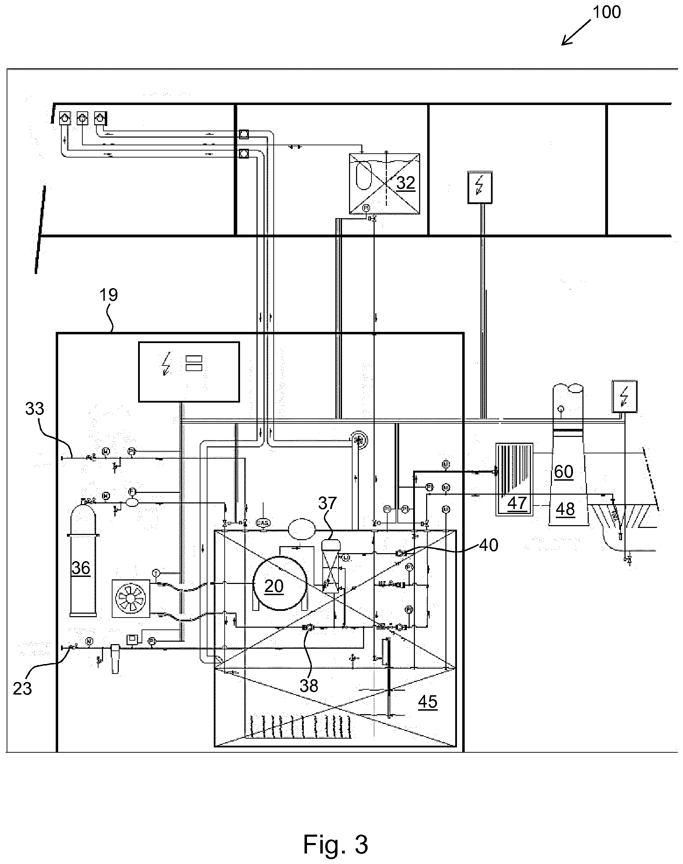

Ein wiederum weiteres Ausführungsbeispiel eines erfindungsgemäßen Antriebssystems 100 ist schematisch in Fig. 3 dargestellt. Komponenten mit den gleichen Bezugszeichen wie bei den Figuren 1 und 2 können gleich gebildet sein und gleich wirken wie zu diesen Figuren beschrieben, und umgekehrt.

Das Antriebssystem 100 aus Fig. 3 ist für den Einsatz auf einem Schiff gestaltet. Als wesentliche Komponenten umfasst es wiederum eine Elektrolyseeinrichtung 20, einen Vergasungstank 45 sowie einen Turbolader 48 und einen Verbrennungsmotor 60.

Wie zu Fig. 1 und 2 erläutert, werden durch die Elektrolyseeinrichtung 20 Wasserstoff- und Sauerstoffgas erzeugt. Zusammen mit gasförmig vorliegenden flüchtigen Kohlenwasserstoffen aus dem Vergasungstank 45 werden das Wasserstoff- und das Sauerstoffgas über den Turbolader zum Verbrennungsmotor 60 geleitet.

Dargestellt ist weiterhin ein Vorratstank 32, welcher einen Vorrat an flüchtigen Kohlenwasserstoffen enthält, insbesondere einen Vorrat an Ethanol oder allgemein anderen flüchtigen organischen Verbindungen. Über eine Leitung können diese steuerbar in den Vergasungstank 45 geleitet werden.

Weiterhin ist eine Luftzufuhr 33 zum Zuführen von komprimierter Luft in den Vergasungstank 45 dargestellt. Diese Luftzufuhr 33 ist wichtig, um größere Mengen an gasförmig vorliegenden flüchtigen Kohlenwasserstoffen im Vergasungstank 45 zu erzeugen, um größere Mengen an flüchtigen Kohlenwasserstoffen dem Turbolader und dem Verbrennungsmotor 60 zuführen zu können. Die Kompression der Luft kann über die hier nicht dargestellte Pressvorrichtung / Luftpumpe erfolgen.

Während über die Luftzufuhr 33 komprimierte Umgebungsluft, also ein Gemisch aus im Wesentlichen Stickstoff und Sauerstoff, in den Vergasungstank 45 einleitbar ist, kann auch ein CO₂-Tank vorhanden sein, über welchen mittels eines Ventils steuerbar CO₂ in den Vergasungstank 45 eingeleitet werden kann.

Die Elektrolyseeinrichtung 20 ist mit einer Kondensatfalle 37 verbunden. Das hier kondensierte Elektrolyt wird sodann über eine Elektrolyt-Zirkulationspumpe 38 zurück in die Elektrolyseeinrichtung 20 gepumpt. Gasförmig vorliegendes Wasserstoff- und Sauerstoffgas wird hingegen aus der Kondensatfalle 37 durch die Unterdruckpumpe 40 abgesaugt.

Das von der Unterdruckpumpe 40 beförderte Knallgas (also das erzeugte Wasserstoff- und Sauerstoffgas) wird zusammen mit Kohlenwasserstoffen oder anderen organischen Verbindungen aus dem Vergasungstank 45 zu einem Diaphragma 47 des Turboladers 48 geleitet.

Über einen Wassereinlass 23 kann Wasser in die Elektrolyseeinrichtung 20 geleitet werden, wo es in Wasserstoffgas und Sauerstoffgas umgewandelt wird. Für die Beförderung des Wassers vom Wassereinlass 23 zur Elektrolyseeinrichtung 20 kann ebenfalls die Elektrolytzirkulationspumpe 38 verwendet werden, womit ein vereinfachter und kosteneffizienter Aufbau ermöglicht wird. Wie dargestellt, können hierzu eine Leitung des Wassers vom Wassereinlass 23 und eine Elektrolytleitung von der Kondensatfalle 37 in einer gemeinsamen Leitung münden, welche zur Elektrolytzirkulationspumpe 38 führt.

Zweckmäßigerweise ist die Elektrolyseeinrichtung 20, welche das leicht entzündliche Knallgas erzeugt, in einem explosionsgeschützten Bereich 19 angeordnet. Dieser explosionsgeschützte Bereich 19 kann insbesondere durch ein luftdichtes Gehäuse gebildet sein und/oder kann galvanisch getrennte Übertragungsmittel für elektrische Signale umfassen. In diesem explosionsgeschützten Bereich 19 können außer der Elektrolyseeinrichtung 20 auch der Vergasungstank 45, die Kondensatfalle 37 und die Unterdruckpumpe 40 angeordnet sein. Um die Größe des explosionsgeschützten Bereiches 19 nicht übermäßig groß gestalten zu müssen, ist hingegen der Vorratstank 32 vorzugsweise außerhalb des explosionsgeschützten Bereiches 19 angeordnet. Der Turbolader 48 und dessen Diaphragma 47 sind zweckmäßigerweise ebenfalls außerhalb des explosionsgeschützten Bereiches 19 angeordnet.

Durch die erfindungsgemäße Elektrolyseeinrichtung wird ermöglicht, Wasserstoff- und Sauerstoffgas besonders effizient zu erzeugen. Bei Einsatz mit einem Verbrennungsmotor kann dieser durch die Zugabe von Knallgas und zusätzlichen flüchtigen organischen Verbindungen besonders effizient betrieben werden. Zudem wird die Schadstoffentstehung verringert.

## Patentansprüche

1. Verfahren zum Betreiben einer Elektrolyseeinrichtung (20),
- wobei mit der Elektrolyseeinrichtung (20) Wasserstoffgas und Sauerstoffgas mit Hilfe von Elektroden (21, 24) gewonnen werden, wobei als Elektroden (21, 24) mehrere Anoden (21) und Kathoden (24) vorgesehen sind und wobei von den Elektroden (21, 24) mindestens eine Elektrode (24) eine Metallplatte und keine Kohlenstofffasern umfasst,
**dadurch gekennzeichnet,**
- **dass** mindestens eine andere der Elektroden (21) Kohlenstofffasern umfasst, welche zu einer blattartigen Form aus Kohlenstofffasern (23) geformt sind, wobei jede blattartige Form aus Kohlenstofffasern (23) zwischen jeweils zwei Platten (22) befestigt ist, welche gemeinsam die entsprechende Elektrode (21) bilden, und
- **dass** die Anoden (21) und Kathoden (24) abwechselnd zu einem Elektrodenstapel übereinander gestapelt sind, wobei ein Elektrolyseraum so mit Elektrolyt gefüllt ist, dass der Elektrodenstapel von Elektrolyt (18) umgeben ist,
- **dass** mit einem Verbrennungsmotor (60) ein Brennstoff verbrannt wird,
- **dass** mit einem Leitungssystem (36), welches den Elektrolyseraum mit dem Verbrennungsmotor verbindet, zusätzlich zum Brennstoff auch ein Gasgemisch, welches zumindest einen Teil des von der Elektrolyseeinrichtung (20) erzeugten Wasserstoffgases und Sauerstoffgases umfasst, dem Verbrennungsmotor (60) zugeführt wird,
- **dass** ein Vergasungstank (45) mit darin aufgenommenen flüchtigen organischen Verbindungen, insbesondere Methanol oder Ethanol, vorgesehen ist,
- **dass** das Leitungssystem (36) mit dem Vergasungstank (45) verbunden ist und dass mit dem Leitungssystem (36) vergaste organische Verbindungen aus dem Vergasungstank (45) dem Gasgemisch, das zum Verbrennungsmotor (60) geleitet wird, beigegeben werden,
- **dass** der Vergasungstank (45) einen Lufteinlass aufweist, über den Luft in den Vergasungstank (45) eingeleitet wird, und dass eine Pressluftvorrichtung (50) vorhanden und mit dem Lufteinlass verbunden ist, wobei mit der Pressluftvorrichtung (50) Luft in den Vergasungstank (45) gepresst wird.

2. Verfahren nach Anspruch 1,
**dadurch gekennzeichnet,**
**dass** eine elektronische Steuereinheit eine Unterdruckpumpe (40) so ansteuert, dass sie aus dem Elektrolyseraum so viel Gas absaugt, dass im Betrieb der Elektrolyseeinrichtung (20) nie mehr als ein Viertel des Elektrolyseraums mit Gas gefüllt ist,
**dass** eine Pumpleistung der Unterdruckpumpe (40) umso größer eingestellt wird, je größer ein Ladedruck eines Verbrennungsmotors (60) ist, wobei eine maximale Pumpleistung eingestellt wird, wenn der Ladedruck einen vorgegebenen Ladedruck-Schwellwert erreicht oder übersteigt,
**dass** ein Vergasungstank (45) mit darin aufgenommenen flüchtigen organischen Verbindungen, insbesondere Methanol oder Ethanol, vorgesehen ist,
**dass** ein Leitungssystem (36), welches erzeugtes Wasserstoffgas und Sauerstoffgas von der Elektrolyseeinrichtung (20) wegführt, mit dem Vergasungstank (45) verbunden ist, um vergaste organische Verbindungen aus dem Vergasungstank (45) zusammen mit dem erzeugten Wasserstoffgas und Sauerstoffgas in einem Verbrennungsmotor (60) zu verbrennen,
**dass** mit einer Pressluftvorrichtung (50) Luft in den Vergasungstank (45) hinein gepresst wird, wobei die Menge an hinein gepresster Luft mit einem über den vorgegebenen Ladedruck-Schwellwert weiter steigenden Ladedruck weiter erhöht wird.

3. Antriebssystem mit
einer Elektrolyseeinrichtung (20) zum Erzeugen von Wasserstoffgas und Sauerstoffgas,
wobei die Elektrolyseeinrichtung (20) einen Elektrolyseraum mit mehreren Elektroden (21, 24) umfasst, wobei als Elektroden (21, 24) mehrere Anoden (21) und Kathoden (24) vorgesehen sind,
wobei mindestens eine der Elektroden (24) eine Metallplatte und keine Kohlenstofffasern umfasst,
wobei mindestens eine andere der Elektroden (21) Kohlenstofffasern umfasst, welche zu einer blattartigen Form aus Kohlenstofffasern (23) geformt sind, und jede blattartige Form aus Kohlenstofffasern (23) zwischen jeweils zwei Platten (22) befestigt ist, welche gemeinsam die entsprechende Elektrode (21) bilden, wobei die Anoden (21) und Kathoden (24) abwechselnd zu einem Elektrodenstapel übereinander gestapelt sind, wobei der Elektrolyseraum so mit Elektrolyt gefüllt ist, dass der Elektrodenstapel von Elektrolyt (18) umgeben ist, wobei das Antriebssystem außerdem Folgendes umfasst:
einen Verbrennungsmotor (60) zum Verbrennen eines Brennstoffs,
einen Brennstofftank, welcher mit dem Verbrennungsmotor (60) verbunden ist zum Versorgen des Verbrennungsmotors (60) mit Brennstoff, insbesondere mit Diesel,
ein Leitungssystem (36), welches den Elektrolyseraum mit dem Verbrennungsmotor (60) verbindet, um zusätzlich zum Brennstoff auch ein Gasgemisch, welches zumindest einen Teil des von der Elektrolyseeinrichtung (20) erzeugten Wasserstoffgases und Sauerstoffgases umfasst, dem Verbrennungsmotor (60) zuzuführen,
einen Vergasungstank (45) mit darin aufgenommenen flüchtigen organischen Verbindungen, insbesondere Methanol oder Ethanol,
wobei das Leitungssystem (36) mit dem Vergasungstank (45) verbunden ist, um vergaste organische Verbindungen aus dem Vergasungstank (45) dem Gasgemisch, das zum Verbrennungsmotor (60) geleitet wird, beizugeben,
wobei der Vergasungstank (45) einen Lufteinlass zum Einleiten von Luft in den Vergasungstank (45) aufweist,
wobei eine Pressluftvorrichtung (50) vorhanden und mit dem Lufteinlass verbunden ist, zum Pressen von Luft durch den Lufteinlass in den Vergasungstank (45).

4. Antriebssystem nach Anspruch 3,
**dadurch gekennzeichnet,**
**dass** das Leitungssystem (36) so gestaltet ist, dass von der Elektrolyseeinrichtung (20) erzeugtes Wasserstoffgas und Sauerstoffgas zumindest teilweise durch den Vergasungstank (45) geleitet werden, und dass der Vergasungstank (45) in einem unteren Bereich mehrere Düsen zum Einleiten von Wasserstoffgas und Sauerstoffgas aufweist,
**dass** ein Auslass in einem oberen Bereich des Vergasungstanks (45) vorgesehen ist, wobei der Auslass mit dem Verbrennungsmotor (60) verbunden ist,
**dass** der Lufteinlass in einem unteren Bereich des Vergasungstanks (45) vorgesehen ist.

5. Antriebssystem nach Anspruch 3 oder 4,
**dadurch gekennzeichnet,**
**dass** sämtliche Elektroden (21), welche Anoden sind, Kohlenstofffasern umfassen, welche zu jeweils einer blattartigen Form aus Kohlenstofffasern (23) geformt sind, und
**dass** sämtliche Elektroden (24), welche Kathoden sind, keine Kohlenstofffasern umfassen, sondern jeweils eine Metallplatte.

6. Antriebssystem nach einem der Ansprüche 3 bis 5,
**dadurch gekennzeichnet,**
**dass** jede Kathode (24) eine titanlegierte Edelstahlplatte umfasst und
**dass** jede der Platten (22), die an eine der blattartigen Formen aus Kohlenstofffasern (23) angrenzen, jeweils eine titanlegierte Edelstahlplatte ist.

7. Antriebssystem nach einem der Ansprüche 3 bis 6,
**dadurch gekennzeichnet,**
**dass** die Platten (22), die an jeweils eine der blattartigen Formen aus Kohlenstofffasern (23) angrenzen, gelocht sind zum Durchlassen von Elektrolyt (18) an die jeweilige blattartige Form aus Kohlenstofffasern (23).

8. Antriebssystem nach einem der Ansprüche 3 bis 7,
**dadurch gekennzeichnet,**
**dass** im Elektrolyseraum mindestens ein Rohr (25) zum Leiten eines Elektrolyts (18) angeordnet ist,
**dass** eine Elektrolytpumpe (28) vorgesehen ist zum Pumpen des Elektrolyts (18) durch das Rohr (25),
**dass** das Rohr (25) mehrere Öffnungen (26) zum Ausstoßen des Elektrolyts (18) aufweist, wobei die Öffnungen (26) so angeordnet sind, dass das Elektrolyt (18) aus den Öffnungen (26) an die Elektroden (21, 24) ausgestoßen wird.

9. Antriebssystem nach Anspruch 8,
**dadurch gekennzeichnet,**
**dass** das mindestens eine Rohr (25) in Stapelungsrichtung der mehreren Elektroden (21, 24) verläuft,
**dass** die Öffnungen (26) im Rohr (25) als Bohrungen gebildet sind, dass die Öffnungen (26) so angeordnet sind, dass zwischen zwei benachbarte Elektroden (21, 24) stets aus mindestens einer der Öffnungen (26) Elektrolyt ausgestoßen wird.

10. Antriebssystem nach Anspruch 8 oder 9,
**dadurch gekennzeichnet,**
**dass** mindestens zwei Rohre (25) an gegenüberliegenden Seiten des Elektrodenstapels angeordnet sind und
**dass** die Öffnungen (26) der Rohre (25) so ausgerichtet sind, dass Elektrolyt aus den verschiedenen Rohren (25) im Wesentlichen aufeinander zu strömt.

11. Antriebssystem nach einem der Ansprüche 3 bis 10,
**dadurch gekennzeichnet,**
**dass** eine Unterdruckpumpe (40) mit dem Elektrolyseraum verbunden ist zum Erzeugen eines Unterdrucks im Elektrolyseraum,
**dass** eine elektronische Steuereinheit vorgesehen und dazu eingerichtet ist, in der Elektrolyseeinrichtung (20) durch die Unterdruckpumpe (40) einen Unterdruck zu erzeugen, welcher unter 1 bar liegt, insbesondere zwischen 200 mbar und 700 mbar, insbesondere zwischen 300 mbar und 600 mbar,
**dass** im oder am Elektrolyseraum ein Drucksensor vorgesehen ist zum Ermitteln eines Drucks im Elektrolyseraum,
**dass** der Drucksensor mit der elektronischen Steuereinheit verbunden ist und dass die elektronische Steuereinheit dazu eingerichtet ist, auf Basis eines mit Hilfe des Drucksensors ermittelten Drucks die Unterdruckpumpe (40) zu regeln.

12. Antriebssystem nach einem der Ansprüche 3 bis 11,
**dadurch gekennzeichnet,**
**dass** die Elektrolyseeinrichtung (20) mit einem elektrischen Strom versorgt wird, durch welchen in der Elektrolyseeinrichtung (20) das Wasserstoffgas und das Sauerstoffgas gewonnen werden, und
**dass** eine elektronische Steuereinheit vorhanden und dazu eingerichtet ist, abhängig von einem Ladedruck des Verbrennungsmotors (60) eine oder mehrere der folgenden Größen einzustellen: den elektrischen Strom; eine Wassereinleitung in die Elektrolyseeinrichtung (20); und eine Pumpleistung der Unterdruckpumpe (40); und
**dass** die elektronische Steuereinheit dazu eingerichtet ist, die einzustellende Größe oder Größen umso größer einzustellen, je höher der Ladedruck ist.

## Claims

1. A method for operating an electrolysis unit (20),
- wherein hydrogen gas and oxygen gas are produced with the electrolysis unit (20) using electrodes (21, 24), wherein a plurality of anodes (21) and cathodes (24) are provided as electrodes (21, 24), and wherein at least one electrode (24) out of the electrodes (21, 24) comprises a metal plate and no carbon fibers,
**characterized in that**
- at least one other of the electrodes (21) comprises carbon fibers formed into a sheet-like shape of carbon fibers (23), wherein each sheet-like shape of carbon fibers (23) is fixed between two respective plates (22) which jointly form the corresponding electrode (21), and
- the anodes (21) and cathodes (24) are alternatingly arranged on top of each other to form an electrode stack, wherein an electrolysis chamber is filled with electrolyte such that the electrode stack is surrounded by electrolyte (18),
- a combustion engine (60) combusts fuel,
- a line system (36) connects the electrolysis chamber with the combustion engine, wherein the line system also supplies a gas mixture which comprises at least a part of the hydrogen gas and oxygen gas produced by the electrolysis unit (20) to the combustion engine (60), in addition to the fuel,
- a gasification tank (45) is provided with volatile organic compounds received therein, in particular methanol or ethanol,
- the line system (36) connects to the gasification tank (45), and the line system (36) adds gaseous organic compounds from the gasification tank (45) to the gas mixture that is fed to the combustion engine (60),
- the gasification tank (45) comprises an air inlet through which air is introduced into the gasification tank (45), and a compressed air unit (50) is provided and connected with the air inlet, wherein the compressed air unit (50) presses air into the gasification tank (45).

2. The method defined in claim 1,
**characterized in that**
an electronic control unit controls a vacuum pump (40) to suck an amount of gas out of the electrolysis chamber such that, in operation of the electrolysis unit (20), never more than a quarter of the electrolysis chamber is filled with gas, a pumping power of the vacuum pump (40) is set to increase with increasing boost pressure of a combustion engine (60), wherein a maximal pumping pressure is set when the boost pressure reaches or surpasses a predefined boost pressure threshold,
a gasification tank (45) is provided with volatile organic compounds received therein, in particular methanol or ethanol,
a line system (36), which transports generated hydrogen gas and oxygen gas away from the electrolysis unit (20), is connected with the gasification tank (45) to combust gaseous organic compounds from the gasification tank (45) together with the generated hydrogen gas and oxygen gas in a combustion engine (60), air is pressed into the gasification tank (45) by means of a compressed air unit (50), wherein the amount of air pressed into the gasification tank (45) is increased with the boost pressure increasing beyond the predefined boost pressure threshold.

3. A drive system comprising
an electrolysis unit (20) for generating hydrogen gas and oxygen gas, wherein the electrolysis unit (20) comprises an electrolysis chamber with a plurality of electrodes (21, 24), wherein a plurality of anodes (21) and cathodes (24) is provided as electrodes (21, 24),
wherein at least one of the electrodes (24) comprises a metal plate and no carbon fibers,
wherein at least one other of the electrodes (21) comprises carbon fibers formed into a sheet-like shape of carbon fibers (23), and each sheet-like shape of carbon fibers (23) is fixed between two respective plates (22) which together form the respective electrode (21),
wherein the anodes (21) and cathodes (24) are alternatingly stacked onto each other to form an electrode stack, wherein the electrolysis chamber is filled with electrolyte such that the electrode stack is surrounded by electrolyte (18), wherein the drive system furthermore comprises:
a combustion engine (60) for combusting a fuel,
a fuel tank connected with the combustion engine (60) for supplying the combustion engine (60) with fuel, in particular with Diesel fuel,
a line system (36) connecting the electrolysis chamber with the combustion engine (60) for supplying a gas mixture comprising at least a part of the hydrogen gas and oxygen gas generated by the electrolysis unit (20) to the combustion engine (60), in addition to the fuel,
a gasification tank (45) with volatile organic compounds, in particular methanol or ethanol, received therein,
wherein the line system (36) connects to the gasification tank (45) to add gaseous organic compounds from the gasification tank (45) to the gas mixture that is fed to the combustion engine (60),
wherein the gasification tank (45) comprises an air inlet for introducing air into the gasification tank (45),
wherein a compressed air unit (50) is provided and connected with the air inlet for pressing air through the air inlet into the gasification tank (45).

4. The drive system defined in claim 3,
**characterized in that**
the line system (36) is configured such that hydrogen gas and oxygen gas generated by the electrolysis unit (20) are at least partially guided through the gasification tank (45), and
the gasification tank (45) comprises in its lower region a plurality of nozzles for introducing hydrogen gas and oxygen gas,
an outlet is provided in an upper region of the gasification tank (45), wherein the outlet is connected with the combustion engine (60),
the air inlet is provided in a lower region of the gasification tank (45).

5. The drive system defined in claim 3 or 4,
**characterized in that**
each electrode (21) that is an anode comprises carbon fibers formed to a respective sheet-like shape of carbon fibers (23), and
each electrode (24) that is a cathode does not comprise carbon fibers but a respective metal plate.

6. The drive system defined in one of the claims 3 to 5,
**characterized in that**
each cathode (24) comprises a titanium alloy stainless steel plate and each of the plates (22) that are adjacent one of the sheet-like shapes of carbon fibers (23) is a respective titanium alloy stainless steel plate.

7. The drive system defined in one of the claims 3 to 6,
**characterized in that**
the plates (22) that are adjacent to one of the sheet-like shapes of carbon fibers (23) are punched for allowing electrolyte (18) to the respective sheet-like shape of carbon fibers (23).

8. The drive system defined in one of the claims 3 to 7,
**characterized in that**
at least one tube (25) for guiding electrolyte (18) is arranged in the electrolysis chamber,
an electrolyte pump (28) is provided for pumping the electrolyte (18) through the tube (25),
the tube (25) comprises a plurality of openings (26) for ejecting the electrolyte (18), wherein the openings (26) are arranged such that the electrolyte (18) is ejected out of the openings (26) onto the electrodes (21, 24).

9. The drive system defined in claim 8,
**characterized in that**
the at least one tube (25) extends in stacking direction of the plurality of electrodes (21, 24),
the openings (26) in the tube (25) are formed as bores,
the openings (26) are arranged such that electrolyte is ejected between every pair of neighboring electrodes (21, 24) from at least a respective one of the openings (26).

10. The drive system defined in claim 8 or 9,
**characterized in that**
at least two tubes (25) are arranged at opposite sides of the electrode stack and the openings (26) of the tubes (25) are orientated such that electrolyte ejected by one of the tubes (25) substantially flows towards electrolyte ejected by the other of the tubes (25), and vice versa.

11. The drive system defined in one of the claims 3 to 10,
**characterized in that**
a vacuum pump (40) is connected with the electrolysis chamber to produce a reduced pressure in the electrolysis chamber,
an electronic control unit is provided and configured to produce a reduced pressure in the electrolysis unit (20) by means of the vacuum pump (40), the reduced pressure lower than 1 bar, in particular between 200 mbar and 700 mbar, in particular between 300 mbar and 600 mbar,
a pressure sensor is provided in or at the electrolysis chamber for determining a pressure in the electrolysis chamber,
the pressure sensor is connected with the electronic control unit and the electronic control unit is configured for a feedback control of the vacuum pump (40) on the basis of a pressure determined with the pressure sensor.

12. The drive system defined in one of the claims 3 to 11,
**characterized in that**
the electrolysis unit (20) is supplied with an electrical current, with which the hydrogen gas and the oxygen gas are produced in the electrolysis unit (20), and an electronic control unit is provided and configured to set, in dependence of a boost pressure of the combustion engine (60), one or more of the following quantities: the electrical current; a water inlet into the electrolysis unit (20); and a pumping power of the vacuum pump (40); and
the electronic control unit is configured to increase the quantity or quantities with increasing boost pressure.

## Revendications

1. Procédé pour le fonctionnement d'un dispositif d'électrolyse (20),
- tandis que du gaz hydrogène et du gaz oxygène sont produits avec le dispositif d'électrolyse (20) à l'aide d'électrodes (21, 24), tandis qu'une pluralité d'anodes (21) et de cathodes (24) sont prévues en tant qu'électrodes (21, 24), et tandis qu'au moins une électrode (24) parmi les électrodes (21, 24) comprend une plaque en métal et aucune fibre de carbone,
**caractérisé en ce que**
- au moins une autre des électrodes (21) comprend des fibres de carbone formées en une forme de type feuille en fibres de carbone (23), tandis que chaque forme de type fibres de carbone (23) est fixée entre deux plaques respectives (22), qui forment conjointement l'électrode correspondante (21), et
- les anodes (21) et cathodes (24) sont empilées alternativement les unes sur les autres pour former une pile d'électrodes, tandis qu'une chambre d'électrolyse est remplie d'électrolyte de sorte que la pile d'électrodes est entourée d'électrolyte (18),
- un moteur à combustion (60) brûle un combustible,
- un système de conduites (36) relie la chambre d'électrolyse avec le moteur à combustion, tandis que le système de conduites fournit également un mélange gazeux, qui comprend au moins une partie du gaz hydrogène et du gaz oxygène produit par le dispositif d'électrolyse (20), au moteur à combustion (60), en plus du combustible,
- un réservoir de gazéification (45) contenant des composés organiques volatiles reçus à l'intérieur, en particulier du méthanol ou de l'éthanol, est prévu,
- le système de conduites (36) est relié au réservoir de gazéification (45), et avec le système de conduites (36) sont ajoutés des composés organiques gazeux provenant du réservoir de gazéification (45) au mélange gazeux qui est conduit aux moteur à combustion (60),
- le réservoir de gazéification (45) comprend une entrée d'air par laquelle de l'air est introduit dans le réservoir de gazéification (45), et un dispositif d'air compressé (50) est prévu et relié à l'entrée d'air, tandis que le dispositif d'air compressé (50) comprime l'air dans le réservoir de gazéification (45).

2. Procédé selon la revendication 1,
**caractérisé en ce que**
un dispositif de contrôle électronique contrôle une pompe à vide (40) pour qu'elle aspire une quantité de gaz de la chambre d'électrolyse, de sorte que, dans le cadre du fonctionnement du dispositif d'électrolyse (20), jamais plus d'un quart de la chambre d'électrolyse ne soit remplie avec du gaz,
une capacité de pompage de la pompe à vide (40) est réglée pour augmenter en même temps que la pression de suralimentation d'un moteur à combustion (60), tandis qu'une capacité de pompage maximale est réglée, lorsque la pression de suralimentation atteint ou dépasse un seuil de pression de suralimentation prédéfini,
un réservoir de gazéification (45) contenant des composés organiques volatiles reçus à l'intérieur, en particulier du méthanol ou de l'éthanol, est prévu,
un système de conduites (36), qui transporte du gaz hydrogène généré et du gaz oxygène généré en l'éloignant du dispositif d'électrolyse (20), est relié au réservoir de gazéification (45) pour brûler des composés organiques gazeux provenant du réservoir de gazéification (45), conjointement avec le gaz hydrogène et le gaz oxygène générés, dans un moteur à combustion (60), de l'air est pressé dans le réservoir de gazéification (45) par le biais d'un dispositif d'air comprimé (50), tandis que la quantité d'air pressé dans le réservoir de gazéification (45) est encore augmentée avec la pression de suralimentation augmentant au-delà du seuil de pression de suralimentation prédéfini.

3. Système d'entraînement comprenant
un dispositif d'électrolyse (20) pour générer du gaz hydrogène et du gaz oxygène,
tandis que le dispositif d'électrolyse (20) comprend une chambre d'électrolyse avec plusieurs électrodes (21, 24), tandis que plusieurs anodes (21) et cathodes (24) sont prévues en tant qu'électrodes (21, 24),
tandis qu'au moins une des électrodes (24) comprend une plaque en métal et aucune fibre de carbone,
tandis qu'au moins une autre des électrodes (21) comprend des fibres de carbone formées en une forme de type feuille en fibres de carbone (23), et chaque forme en forme de type feuille en fibres de carbone (23) est fixée entre deux plaques (22) respectives, qui forment ensemble l'électrode (21) correspondante,
tandis que les anodes (21) et les cathodes (24) sont empilées alternativement les unes sur les autres pour former une pile d'électrodes, tandis que la chambre d'électrolyse est remplie d'électrolyte de sorte que la pile d'électrodes est entourée d'électrolyte (18),
tandis que le système d'entraînement comprend également :
un moteur à combustion (60) pour brûler un carburant,
un réservoir de carburant relié au moteur à combustion (60) pour alimenter le moteur à combustion (60) en fuel, en particulier avec du diesel,
un système de conduites (36) reliant la chambre d'électrolyse au moteur à combustion (60) pour fournir un mélange gazeux comprenant au moins une partie du gaz hydrogène et du gaz oxygène générés par le dispositif d'électrolyse (20) au moteur à combustion (60), en plus du carburant,
un réservoir de gazéification (45) avec des composés organiques volatiles reçus à l'intérieur, en particulier du méthanol ou de l'éthanol,
tandis que le système de conduites (36) est relié au réservoir de gazéification (45) pour ajouter des composés organiques gazeux provenant du réservoir de gazéification (45) au mélange gazeux qui est conduit au moteur à combustion (60),
tandis que le réservoir de gazéification (45) comprend une entrée d'air pour introduire de l'air dans le réservoir de gazéification (45),
tandis qu'un dispositif d'air compressé (50) est prévu et relié à l'entrée d'air pour presser, via l'entrée d'air, de l'air dans le réservoir de gazéification (45).

4. Système d'entraînement selon la revendication 3,
**caractérisé en ce que**
le système de conduites (36) est configuré de telle sorte que le gaz hydrogène et le gaz oxygène générés par le dispositif d'électrolyse (20) sont au moins en partie guidés via le réservoir de gazéification (45), et
le réservoir de gazéification (45) comprend, dans une zone inférieure, plusieurs buses pour introduire le gaz hydrogène et le gaz oxygène, une sortie est prévue dans une zone supérieure du réservoir de gazéification (45), tandis que la sortie est reliée au moteur à combustion (60), l'entrée d'air est prévue dans une zone inférieure du réservoir de gazéification (45).

5. Système d'entraînement selon la revendication 3 ou 4,
**caractérisé en ce que**
toutes les électrodes (21), qui sont des anodes, comprennent des fibres de carbone formées en une forme de type feuille en fibres de carbone (23) respective, et
toutes les électrodes (24), qui sont des cathodes, ne comprennent aucune fibre en carbone, mais uniquement une plaque en métal respective.

6. Système d'entraînement selon une des revendications 3 à 5,
**caractérisé en ce que**
chaque cathode (24) comprend une plaque en acier inoxydable en alliage de titane et
chacune des plaques (22), qui sont adjacentes à l'une des formes de type feuille en fibres de carbone (23), est une plaque en acier inoxydable en alliage de titane respective.

7. Système d'entraînement selon une des revendications 3 à 6,
**caractérisé en ce que**
les plaques (22), qui sont adjacentes à l'une des formes de type feuille en fibres de carbone (23) respective, sont perforées pour laisser passer l'électrolyte (18) dans la forme de type feuille en fibres de carbone (23) respective.

8. Système d'entraînement selon une des revendications 3 à 7,
**caractérisé en ce que**
au moins un tube (25) pour conduire un électrolyte (18) est agencé dans la chambre d'électrolyse,
une pompe à électrolyte (28) est prévue pour pomper l'électrolyte (18) via le tube (25),
le tube (25) comprend une pluralité d'ouvertures (26) pour éjecter l'électrolyte (18), tandis que les ouvertures (26) sont agencées de sorte que l'électrolyte (18) soit éjecté hors des ouvertures (26) sur les électrodes (21, 24).

9. Système d'entraînement selon la revendication 8,
**caractérisé en ce que**
au moins un tube (25) s'étend dans une direction d'empilement de la pluralité d'électrodes (21, 24),
les ouvertures (26) dans le tube (25) sont en forme de trous,
les ouvertures (26) sont agencées de sorte que l'électrolyte soit éjecté entre chaque paire d'électrodes voisines (21, 24) toujours à partir d'au moins une des ouvertures (26).

10. Système d'entraînement selon la revendication 8 ou 9,
**caractérisé en ce que**
au moins deux tubes (25) sont agencés à des côtés opposés de la pile d'électrodes et
les ouvertures (26) des tubes (25) sont orientées de sorte que l'électrolyte éjecté par l'un des tubes (25) afflue essentiellement vers l'électrolyte éjecté par l'autre des tubes (25) et inversement.

11. Système d'entraînement selon une des revendications 3 à 10,
**caractérisé en ce que**
une pompe à vide (40) est reliée à la chambre d'électrolyse pour produire une pression réduite dans la chambre d'électrolyse,
un dispositif de contrôle électronique est prévu et configuré pour produire, dans le dispositif d'électrolyse (20), par le biais d'une pompe à vide (40), une pression réduite inférieure à 1 bar, en particulier entre 200 mbar et 700 mbar, en particulier entre 300 mbar et 600 mbar,
un capteur de pression est prévu dans ou à la chambre d'électrolyse pour déterminer une pression dans la chambre d'électrolyse,
le capteur de pression est relié au dispositif de contrôle électronique et le dispositif de contrôle électronique est configuré pour régler la pompe à vide (40) sur la base d'une pression déterminée à l'aide du capteur de pression.

12. Système d'entraînement selon une des revendications 3 à 11,
**caractérisé en ce que**
le dispositif d'électrolyse (20) est alimenté par un courant électrique par lequel le gaz hydrogène et le gaz oxygène sont produits dans le dispositif d'électrolyse (20), et
un dispositif de contrôle électronique est prévu et configuré pour régler, en fonction d'une pression de suralimentation du moteur à combustion (60), une ou plusieurs des quantités suivantes : le courant électrique, une entrée d'eau dans le dispositif d'électrolyse (20), une capacité de pompage de la pompe à vide (40), et
le dispositif de contrôle électronique est configuré pour augmenter la quantité ou les quantités lorsque la pression de suralimentation augmente.
